# EUROPÄISCHE PATENTANMELDUNG

(11) **EP 4 831 690 A1**
(43) Veröffentlichungstag der Anmeldung: **28.10.2026**
(21) Anmeldenummer: 26165598.9
(22) Anmeldetag: 17.03.2026
(51) Int. Cl.: G01S 17/894, H04N 25/68

(54) **VORRICHTUNG ZUR ÜBERWACHUNG EINES BILDSENSORS**

(30) Priorität: 24.04.2025 DE 102025115861
(71) Anmelder: SICK AG, 79183 Waldkirch (DE)
(72) Erfinder: Herbstritt, Alexander, 79104 Freiburg (DE); Geisemeyer, Ino, 79117 Freiburg (DE); Payne, Andrew, 3118 Papamoa (NZ)
(74) Vertreter: Manitz Finsterwald Patent- und Rechtsanwaltspartnerschaft mbB

(57) **Zusammenfassung**

Die Erfindung betrifft eine Vorrichtung zur Überwachung eines Bildsensors, mit: einem Bildsensor mit einer Vielzahl von Pixeln; einer Steuereinheit, die ausgebildet ist, die Pixel des Bildsensors derart anzusteuern, dass zumindest ein erstes Pixel, welches zu einem zweiten Pixel benachbart angeordnet ist, eine erste Integrationszeit aufweist und das zweite Pixel ein zweite Integrationszeit aufweist, welche sich von der ersten Integrationszeit unterscheidet; und einer Datenverarbeitungseinheit, die ausgebildet ist, ein Pixelwertverhältnis basierend auf einem Pixelwert des ersten und zweiten Pixels zu ermitteln und basierend auf einem Vergleich des Pixelwertverhältnisses mit einem Integrationszeitverhältnis, welches auf der ersten und zweiten Integrationszeit basiert, einen fehlerhaften Zustand des Bildsensors zu ermitteln.

## Beschreibung

Die Erfindung betrifft eine Vorrichtung und ein Verfahren zur Überwachung eines Bildsensors.

Bildsensoren, insbesondere zweidimensionale Pixelarrays, wie 3D-Time-of-Flight-(ToF)-Bildsensoren, spielen eine zentrale Rolle in vielen modernen Anwendungen, darunter industrielle Sensorik, Robotik und autonome Systeme. Eine zuverlässige Überwachung der Funktionalität solcher Bildsensoren während ihres Betriebs ist essenziell, um ihre korrekte Arbeitsweise sicherzustellen und potenzielle Fehlfunktionen frühzeitig zu erkennen. Dies ist besonders bei Anwendungen mit hohen Anforderungen an die funktionale Sicherheit von Bedeutung.

Gängige Ansätze zur Überwachung von Bildsensoren, wie beispielsweise die Verwendung redundanter Bildsensoren oder redundanter Strukturen innerhalb eines Bildsensors, sind jedoch mit erheblichen Nachteilen verbunden. Sie führen zu einem erhöhten Platzbedarf auf dem Chip, einem hohen Energieverbrauch, langen Verarbeitungszeiten und hohen Kosten.

Es ist eine Aufgabe der Erfindung eine verbesserte Vorrichtung zur Überwachung eines Bildsensors bereitzustellen.

Diese Aufgabe wird durch den Gegenstand des Anspruchs 1 gelöst.

Ein erster Aspekt der Erfindung betrifft eine Vorrichtung zur Überwachung eines Bildsensors, mit:
einem Bildsensor mit einer Vielzahl von Pixeln;
einer Steuereinheit, die ausgebildet ist, die Pixel des Bildsensors derart anzusteuern, dass zumindest ein erstes Pixel, welches zu einem zweiten Pixel benachbart angeordnet ist, eine erste Integrationszeit aufweist und das zweite Pixel ein zweite Integrationszeit aufweist, welche sich von der ersten Integrationszeit unterscheidet; und
einer Datenverarbeitungseinheit, die ausgebildet ist, ein Pixelwertverhältnis basierend auf einem Pixelwert des ersten und zweiten Pixels zu ermitteln und basierend auf einem Vergleich des Pixelwertverhältnisses mit einem Integrationszeitverhältnis, welches auf der ersten und zweiten Integrationszeit basiert, einen fehlerhaften Zustand des Bildsensors zu ermitteln.

Die Erfindung setzt auf der Erkenntnis auf, dass von einem Bildsensor erfasste Objekte in der Regel durch eine Vielzahl von Pixeln abgebildet werden. Statistisch gesehen ergeben sich somit eine Vielzahl von benachbarten Pixelpaaren, welche einen nahezu identischen Pixelwert aufweisen. Dies gilt insbesondere für Tiefensensoren, bei welchen der jeweilige Pixelwert von der Distanz des jeweiligen Objekts zum Bildsensor abhängt. Die Pixelwerte benachbarter Pixel können somit verglichen und ausgewertet werden, um potenzielle Fehlfunktionen des Bildsensors zu ermitteln bzw. um die Funktionsweise des Bildsensors zu überwachen. Der Fehlerzustand des Bildsensor kann beispielsweise anzeigen, dass der Bildsensor fehlerhafte und/oder defekte Pixel umfasst und/oder dass die Funktionsweise des Bildsensors gestört ist.

Der Bildsensor kann insbesondere zu einer lichtlaufzeitbasierten Messung ausgelegt sein und dementsprechend ein iToF-Sensor sein. Unter dem Pixelwert kann ein aus dem Pixel, z.B. elektrisch, auslesbarer Rohwert verstanden werden. Es versteht sich, dass in einem Rohwert auch mehrere physikalische Pixel oder mehrere unterschiedliche Messungen (z.B. mit unterschiedlichen Frequenzen) zusammengefasst werden können.

Unterscheidet sich die Integrationszeit der benachbarten Pixelpaare voneinander, so schlägt sich dies ebenfalls in dem Pixelwertverhältnis der benachbarten Pixelwerte nieder. Mit anderen Worten entspricht das Pixelwertverhältnis für benachbarte Pixel, welche dasselbe Objekt abbilden, im Wesentlichen dem jeweiligen Integrationszeitverhältnis. Basierend auf einem Vergleich des Pixelwertverhältnisses mit dem Integrationszeitverhältnis kann somit insbesondere unter Verwendung einer statistischen Analyse über eine Vielzahl von Pixeln ein fehlerhafter Zustand des Bildsensors ermittelt werden. Insbesondere wenn das Pixel mit einer längeren Integrationszeit nicht gesättigt ist und das Pixel mit einer kürzeren Integrationszeit bzw. der zugehörige Pixelwert nicht durch Rauschen dominiert wird, spiegelt sich das Integrationszeitverhältnis in dem Pixelwertverhältnis der benachbarten Pixel wider, welche dieselben Objekte abbilden, insbesondere wobei das Pixelwertverhältnis nahezu identisch zu dem Integrationszeitverhältnis ist. Aufgrund von sensorspezifischen Eigenschaften und/oder der gewählten Charakteristika für die Aufnahme der Messdaten, wie beispielsweise der Modulationsfrequenz des Lichts und/oder dem Phasenversatz zwischen ausgesendetem Lichtstrahl und der Pixelansteuerung, oder anderen zu berücksichtigenden externen Störgrößen kann es auch sein, dass das zu erwartende Pixelwertverhältnis von dem Integrationszeitverhältnis, insbesondere geringfügig, abweicht. Eine solche Abweichung kann beispielsweise weniger als 10%, 5% oder 2% des Betrags des Integrationszeitverhältnisses betragen. In diesen Fällen kann das zu erwartende Pixelwertverhältnis basierend auf dem Integrationszeitverhältnis ermittelt werden, wobei basierend auf einem Vergleich des Pixelwertverhältnisses mit dem zu erwartenden Pixelwertverhältnis ein fehlerhafter Zustand des Bildsensors ermittelt wird.

Die erste und zweite Integrationszeit ist insbesondere einstellbar und kann anwendungsspezifisch und/oder abhängig von der aufgenommenen Umgebung, insbesondere den Lichtverhältnissen der Umgebung, eingestellt werden. Entsprechend kann das Integrationszeitverhältnis einstellbar und/oder vorgegeben sein. Das Integrationszeitverhältnis kann auch als nominelles HDR-Verhältnis (High-Dynamic-Range-Verhältnis) bezeichnet werden. Die Steuereinheit zur Ansteuerung des Bildsensors kann ferner eine separate Einheit sein, welche speziell für die Überwachung des Bildsensors zum Einsatz kommt. Die Steuereinheit und die Datenverarbeitungseinheit können grundsätzlich auch als eine gemeinsame Einheit ausgebildet sein. Alternativ kann die Überwachung des Bildsensors auch durch eine von der Steuereinheit separate Einheit, beispielsweise ein FPGA, ein SoC oder eine sonstige Recheneinrichtung (CPU), erfolgen.

Der Pixelwert eines Pixels ergibt sich insbesondere aus der Menge an von dem Pixel aufgenommenem Licht, welche von der Integrationszeit des jeweiligen Pixels abhängt. Weitere Faktoren wie beispielsweise die Sättigungskapazität (auch Full-Well-Kapazität genannt) oder Störgrößen wie Rauschen, Offsets und dergleichen können den Pixelwert zusätzlich beeinflussen. Der Pixelwert ist insbesondere eine numerische Information, die einem jeweiligen Pixel zugeordnet ist. Ein Pixel umfasst insbesondere zumindest ein lichtempfindliches Element wie z.B. eine Photodiode, die ausgebildet ist, das empfangene Licht in ein zugehöriges elektrisches Signal umzusetzen. Eine Ausleseschaltung, welche beispielsweise auch als Teil der Datenverarbeitungseinheit ausgebildet sein kann, überträgt und/oder empfängt das analoge elektrische Signal, verstärkt dieses und/oder wandelt das elektrische Signal, z.B. mittels eines ADCs, in ein digitales Signal zur Weiterverarbeitung um. Der Bildsensor und/oder die Ausleseschaltung können insbesondere CDS-fähig (Correlated Double Sampling) sein.

Die Vorrichtung zur Überwachung des Bildsensor kann darüber hinaus eine Lichterzeugungseinheit, z.B. einen Laser, zum Erzeugen von Licht umfassen, welches in die Umgebung entsendet wird, von Objekten in der Umgebung reflektiert oder remittiert wird und von dem Bildsensor bzw. den zugehörigen Pixeln als reflektiertes (bzw. remittiertes) Licht empfangen wird. Bei dem Bildsensor kann es sich um jede Art von Bildsensor handeln, insbesondere kann der Bildsensor einen TOF-Bildsensor, eine Stereokamera, einen LIDAR-Sensor oder einen Ultraschallsensor umfassen.

Ein Vorteil der Erfindung liegt darin, dass die Überwachung eines Bildsensors, insbesondere der folgenden Funktionalitäten, erleichtert wird, da keine zusätzlichen Komponenten hierfür erforderlich sind: Funktionalität der Pixel in dem Pixelarray, Funktionalität der Zeilensteuerungsschaltungen, Integrationszeitsteuerung (z.B. zeilenweise), allgemeine Bildsensor-Funktionalität, Erkennung von defekten oder toten Pixeln (auch nach der Produktion). Die Erfindung ermöglicht darüber hinaus die Überwachung des Bildsensors während der Laufzeit, z. B. als Teil des Satzes von tiefenbezogenen Messungen, und unter Verwendung vorhandener Schaltungen, d. h. ohne zusätzliche Schaltungen, die ausschließlich für die Überwachung verwendet werden. Zusammenfassend wird somit die diagnostische Überwachung des Bildsensors verbessert, wodurch z.B. auch "einfachere" Bildsensoren im Bereich der funktionalen Sicherheit einsetzbar werden.

Weitere Ausführungsformen der Erfindung sind der Beschreibung, den Unteransprüchen und den Zeichnungen zu entnehmen.

Gemäß einer ersten Ausführungsform umfassen die Pixel differenzielle Pixel. Ein differenzielles Pixel kann beispielsweise zwei oder mehr (Sub-)Pixel umfassen, welche genutzt werden, um eine Differenzmessung durchzuführen. Die Differenzmessung kann beispielsweise einen Phasenversatz zurückliefern, aus welchem dann die Tiefe bzw. der Abstand zu einem Objekt ermittelt werden kann.

Statt das Bildsignal jedes (Sub-)Pixels einzeln zu verarbeiten, wird also die Differenz zwischen den (Sub-)Pixelwerten genutzt, um die relevanten Informationen zu extrahieren. Vorteilhafterweise kann hierdurch gemeinsames Rauschen der Pixel reduziert werden und somit ein verbesserte Signal-zu-Rausch-Verhältnis (SNR) erzielt werden. Insbesondere bei TOF-Bildsensoren können differenzielle Pixel verwendet werden, um kleine Änderungen in der Entfernung oder Tiefe zwischen benachbarten Bereichen der Szene zu detektieren. Dies verbessert die Genauigkeit der Tiefenmessung und ermöglicht es, kleinere Objekte oder feine Details in der Umgebung besser zu erfassen. Das erfindungsgemäße Überwachungsverfahren bietet sich insbesondere für derartige Tiefensensoren dahingehend an, dass Pixel, welche Bereiche gleicher Entfernung erfassen, vergleichbare Pixelwerte aufweisen, sodass die vorstehenden Überlegungen für eine Vielzahl von Pixeln anwendbar sind. Ferner kann auch analoges Pixel-Binning eingesetzt werden, bei dem die Signale mehrerer benachbarter Pixel auf einem Bildsensor analog (vor der Digitalisierung) kombiniert werden, um ein einzelnes, gemeinsames Signal zu erzeugen. Dies erlaubt eine Verbesserung des Signal-zu-Rausch-Verhältnisses (SNR) was wiederum für die Überwachung des Pixelwertverhältnisses vorteilhaft sein kann.

Gemäß einer weiteren Ausführungsform umfasst der Bildsensor ein zweidimensionales Pixelarray und ist die Steuereinheit ausgebildet den Bildsensor gemäß einem Ansteuerungsmuster anzusteuern, bei dem eine erste Gruppe von Spalten oder Zeilen des Pixelarrays die erste Integrationszeit aufweisen und eine zweite Gruppe von Spalten und Zeilen des Pixelarrays die zweite Integrationszeit aufweisen, wobei die Spalten oder Zeilen der ersten Gruppe und die Spalten oder Zeilen der zweiten Gruppe alternierend angeordnet sind. Mit anderen Worten ergibt sich für das Pixelarray ein Streifenmuster, bei dem alternierend eine Zeile oder Spalte die erste Integrationszeit aufweist und die nächste Zeile oder Spalte die zweite Integrationszeit aufweist. Der Vorteil eines solchen Ansteuerungsmusters ist zum einen, dass es den Dynamikbereich der Messung vergrößert und einfach zu implementieren ist, und zum anderen, dass es gleichzeitig die der Erfindung zugrundeliegende Idee umsetzt, da nun eine Vielzahl von benachbarten Pixelpaaren verwendet und verglichen werden können, um eine potenzielle Fehlfunktion des Bildsensors festzustellen. Wird das Ansteuerungsmuster zeilenweise implementiert, kann beispielsweise jedes Pixel einer jeweiligen Zeile mit dem benachbarten Pixel einer anderen, angrenzenden Zeile verglichen werden, um das entsprechende Pixelwertverhältnis zu bestimmen. Die gilt analog für die spaltenweise Implementierung des Ansteuerungsmusters. Der Bildsensor wird also insbesondere in einer Art verschachteltem HDR-Modus betrieben.

Die erste Integrationszeit kann derart eingestellt sein, dass diese zumindest 2 mal, 3 mal oder vorzugsweise 4 mal größer als die zweite Integrationszeit ist. Größere Integrationszeitunterschiede erhöhen zwar den Dynamikbereich des Bildsensors, die Anzahl der vergleichbaren Pixel verringert sich jedoch, da sich die Anzahl der gesättigten oder verrauschten Pixelwerte für typische abzubildende Szenen erhöht.

Gemäß einer weiteren Ausführungsform ist die Datenverarbeitungseinheit ausgebildet, die von den Pixeln erzeugten Signale vorzuverarbeiten, wobei die Vorverarbeitungsschritte zumindest einen der folgenden Schritte umfasst: Verstärkung, Filterung, Normalisierung, Formatkonvertierung oder Erkennen und/oder Aussortierung von gesättigten Pixeln. Die Datenverarbeitungseinheit kann hierfür beispielsweise eine separate Vorverarbeitungseinheit umfassen. Die Vorverarbeitung kann analog und/oder digital erfolgen. Die analoge Vorverarbeitung kann beispielsweise die Verstärkung und/oder Filterung des analogen Signals umfassen, während die digitale Vorverarbeitung insbesondere die Normalisierung der Pixelwerte, insbesondere der unterschiedlichen Verstärkungseinstellungen der Spaltenverstärker, z.B. wenn PGAs oder VGAs verwendet werden, oder die Formatkonvertierung der digitalen Daten umfasst. Die Vorverarbeitung kann ferner eine Aussortierung von Pixeln oder Pixelwerten auf Basis vorgegebener Kriterien umfassen, welche bei der Vorverarbeitung geprüft werden. Beispielsweise können Pixel im Zuge der Vorverarbeitung als "valide Pixel" eingestuft werden, wenn die Pixel nicht gesättigt sind und/oder die jeweiligen Pixelwerte größer als ein vorgegeben Schwellenwert sind, insbesondere ungleich Null oder größer als eine Rauschschwelle. Alternativ oder zusätzlich können Pixel im Zuge der Vorverarbeitung als "valide Pixel" eingestuft werden, wenn für ein Pixelpaar der Pixelwert für ein Pixel, welcher über dem vorgegebenen Schwellenwert (also z.B. der Rauschschwelle) liegt, nicht mehr als das zweifache, dreifache oder vierfache des vorgegebenen Schwellenwerts beträgt und gleichzeitig der Pixelwert für das andere Pixel des Pixelpaars unter dem vorgegebenen Schwellenwert liegt. Die Ermittlung des Pixelwertverhältnisses kann somit beispielsweise nur für valide Pixel erfolgen, sodass die Aussagekraft und damit die Robustheit und Zuverlässigkeit der Überprüfung verbessert wird. Im Zuge der Vorverarbeitung können somit aus den erzeugten Rohmessdaten komplexere Daten entstehen, welche von der Datenverarbeitungseinheit im Anschluss ausgewertet werden.

Gemäß einer Ausführungsform ist die Datenverarbeitungseinheit ausgebildet, Informationen über valide und/oder nicht valide Pixel auszugeben, beispielsweise zusammen mit weiteren von der Vorrichtung ermittelten Daten, wie Konfidenzwerten der Tiefenmessung und/oder von Tiefenwerten. Anders ausgedrückt, können die Informationen über valide und/oder nicht valide Pixel in einem, z.B. bereits bestehenden, Statusbild hinzugefügt und/oder ausgegeben werden, sodass die Beurteilung im Nachgang unter Einbeziehung aller Informationen nachvollzogen werden kann.

Gemäß einer Ausführungsform ist die Datenverarbeitungseinheit ausgebildet, eine Tiefenkarte zu erstellen und auszugeben. Bei der Tiefenkarte kann es sich also um ein Ausgabebild mit Abstandswerten zu den Objekten in der Umgebung handeln. Für die Tiefenkarte können auch aussortierte bzw. nicht valide Pixel herangezogen werden. Insbesondere wird bei einem Pixelpaar derjenige der Pixel für die Tiefenkarte verwendet, welcher nicht in Sättigung ist und/oder dessen Pixelwert nicht unter dem vorgegebenen Schwellenwert liegt. Es kann für die Tiefenkarte also beispielsweise zwischen Pixeln mit längerer oder kürzerer Integrationszeit ausgewählt werden, wodurch sich ein erhöhter Dynamikumfang für die Tiefenkarte ergeben kann.

Gemäß einer weiteren Ausführungsform ist die Datenverarbeitungseinheit ausgebildet, einen fehlerhaften Zustand basierend auf zumindest einer Fehlerbedingung festzustellen, insbesondere wobei die Fehlerbedingung umfasst, dass die Abweichung des Pixelwertverhältnisses von dem Integrationszeitverhältnis größer als ein vorgegebener Abweichungsschwellenwert ist. Die Fehlerbedingung kann beispielsweise auf eine Vielzahl von Pixelpaaren angewendet werden, um basierend auf einer statistischen Analyse einen Fehlerzustand des Bildsensors festzustellen.

Die erste Integrationszeit wird im Folgenden als t_{lang} und die zweite Integrationszeit als t_{kurz} bezeichnet. Das Integrationszeitverhältnis kann somit wie folgt bestimmt werden: $Intergrationszeitverh ä ltnis = \frac{{t}_{lang}}{{t}_{kurz}} \left(oder\frac{{t}_{kurz}}{{t}_{lang}}\right)$

Welche der beiden vorstehenden Optionen für das Integrationszeitverhältnis verwendet wird, kann beispielsweise in Abhängigkeit der vorhandenen Hardwarespezifikationen bestimmt werden.

Für eine Vielzahl von Pixeln, welche beispielsweise dasselbe Objekt oder einen Bildbereich gleicher Entfernung abbilden, gilt somit folgender Ausdruck, zumindest Näherungsweise: $Intergrationszeitverh ä ltnis = \frac{{t}_{lang}}{{t}_{kurz}} = \frac{{P}_{1}}{{P}_{2}} = Pixelwertverh ä ltnis$ wobei *P*₁ dem Pixelwert des ersten Pixels entspricht und *P*₂ dem Pixelwert des zweiten Pixels entspricht.

Eine Fehlerbedingung kann basierend auf den vorstehenden Ausführungen beispielsweise wie folgt definiert werden: $abs \left(\frac{{P}_{1}}{Intergrationszeitverh ä ltnis}-{P}_{2}\right) < Abweichungsschwellenwert$

Eine alternative Schreibweise der Fehlerbedingung kann wie folgt formuliert werden: $\begin{matrix}Intergrationszeitverhältnis - Abweichungsschwellenwert < \frac{{P}_{1}}{{P}_{2}} \\ < Intergrationszeitverhältnis + Abweichungsschwellenwert\end{matrix}$

Der Abweichungsschwellenwert kann insbesondere in Abhängigkeit des Betrags bzw. der Größe des maximal erfassten Pixelwerts, des Pixelwertverhältnisses oder eines Mittelwerts der ermittelten Pixelwertverhältnisse festgelegt werden. Dies kann insbesondere bei Signalen höherer Intensität mit höherem Photonenschrotrauschen (engl. photon shot noise) vorteilhaft sein.

Gemäß einer weiteren Ausführungsform ist die Datenverarbeitungseinheit ausgebildet, einen fehlerhaften Zustand festzustellen, wenn die Fehlerbedingung für eine Mindestanzahl von benachbarten Pixelpaaren erfüllt ist. Die Mindestanzahl kann beispielsweise vorab empirisch ermittelt werden und anwendungsspezifisch oder in Abhängigkeit der Umgebung angepasst werden. Erfüllt die Mindestanzahl von Pixelpaaren die Fehlerbedingung, so wird hierdurch impliziert, dass ein Fehlerzustand vorliegt und der Bildsensor nicht fehlerfrei funktioniert. Zusätzlich oder alternativ zu der Anzahl der Pixelpaare, welche die Fehlerbedingung erfüllen, kann außerdem eine Pixelstatuskarte, z.B. in Form einer Heatmap, erstellt und ausgewertet werden, um einen Fehlerzustand des Bildsensors zu ermitteln. Beispielsweise kann die Pixelstatuskarte dazu genutzt werden, um Bildbereiche (Regions of Interest, ROI) zu ermitteln, in denen eine erhöhte Anzahl von Pixelpaaren die Fehlerbedingung erfüllen, und einen Fehlerzustand basierend auf diesen Bildbereichen festzustellen.

Gemäß einer weiteren Ausführungsform umfasst die Fehlerbedingung, dass die Abweichung eines Mittelwerts und/oder Medians einer Vielzahl von Pixelwertverhältnissen von dem Integrationszeitverhältnis oder dass die Abweichung der Standardabweichung der Vielzahl von Pixelwertverhältnissen von einem Standardabweichungsreferenzwert größer als ein vorgegebener Abweichungsschwellenwert ist. Die Fehlerbedingung kann insbesondere alle benachbarten Pixelpaare, welche unterschiedliche Integrationszeiten aufweisen, berücksichtigen. Mit anderen Worten wird eine signifikante Abweichung des Mittelwerts und/oder des Medians von dem voreingestellten Integrationszeitverhältnis und/oder eine signifikante Abweichung der ermittelten Standardabweichung von einem Standardabweichungsreferenzwert als Indikation auf einen Fehlerzustand angesehen. Zusätzlich oder alternativ kann ein Histogramm der Pixelwertverhältnisse erstellt und ausgewertet werden, um einen Fehlerzustand des Bildsensors zu ermitteln.

Gemäß einer weiteren Ausführungsform ist die Datenverarbeitungseinheit ausgebildet, einen fehlerhaften Zustand des Bildsensors basierend auf zumindest einem Pixelfenster zu ermitteln, welches einen Teilbereich des Pixelarrays umfasst. Eine ROI, auf Basis derer ein Fehlerzustand des Bildsensors ermittelt wird, kann beispielsweise vorgegeben sein (z.B. durch einen von dem Objektiv gut beleuchteten Bereich des Bildsensors) oder basierend auf vorgegebenen Kriterien ermittelt werden. Die ROI kann einen Teilbereich des Bildes bzw. eine Teilmenge von Pixeln des Pixelarrays umfassen. Vorteilhafterweise kann der Fehlerzustand in einem solchen Fall basierend auf einer reduzierten Anzahl von Pixeln ermittelt werden, sodass eine schnelle, mit weniger Rechenaufwand verbundene Fehlerermittlung möglich ist. Die ROI kann basierend auf vordefinierten Kriterien ermittelt werden. Ein solches Kriterium kann beispielsweise sein, dass in dem Pixelfenster ein vordefiniertes Verhältnis zwischen benachbarten Pixelpaaren vorliegt, welche die Fehlerbedingung erfüllen und welche die Fehlerbedingung nicht erfüllen. Beispielsweise kann die ROI eine Pixelgruppe umfassen, bei der mehr als 50%, mehr als 60% oder mehr als 75% der benachbarten Pixelpaare die Fehlerbedingung erfüllen. Grundsätzlich können auch mehrere ROls für die Auswertung definiert und verwendet werden, wobei beispielsweise ein Fehlerzustand ermittelt wird, wenn ein Fehlerzustand in einer Mindestanzahl von ROls oder in allen ROls ermittelt wird. Das Pixelfenster bzw. die ROI kann eine vorgegebene Größe umfassen oder in seiner Größe variabel sein.

Gemäß einer weiteren Ausführungsform ist die Datenverarbeitungseinheit ausgebildet, einen fehlerhaften Zustand basierend auf einer, insbesondere einzigen, durch den Bildsensor erzeugten Aufnahme und/oder einer Vielzahl von zeitlich aufeinanderfolgenden, unterschiedlichen Aufnahmen zu ermitteln. Die Verwendung einer einzigen Aufnahme zur Fehlerermittlung ist mit weniger Rechenaufwand verbunden, während hingegen die Verwendung mehrerer Aufnahmen zur Ermittlung eines Fehlerzustands des Bildsensors zu einer robusteren Erfassung eines Fehlerzustands beitragen. Insbesondere bei unterschiedlichen, über die Zeit erfolgten Aufnahmen des Bildsensors können Abweichungen bzw. Störungen, denen ein Fehler im Bildsensor zugrunde liegt, zuverlässiger erfasst werden, da Störungen von außen nicht dauerhaft vorliegen und somit durch den Vergleich mit über die Zeit erfassten Aufnahmen leichter detektierbar sind. Insbesondere wenn eine Vielzahl von unterschiedlichen Aufnahmen für die Fehlererkennung verwendet werden, kann das Integrationszeitverhältnis und/oder das Ansteuerungsmuster für eine jeweilige Aufnahme angepasst und/oder verändert werden. Die Erfolgsaussichten der Fehlererkennung können beispielswiese von dem gewählten Integrationszeitverhältnis und/oder Ansteuerungsmuster des Bildsensors abhängen. Das optimale Integrationszeitverhältnis und/oder Ansteuerungsmuster kann dabei insbesondere von der Umgebung und den zugehörigen Lichtverhältnissen abhängen.

Gemäß einer weiteren Ausführungsform ist der Bildsensor ausgebildet, in einem Alternativbetriebszustand des Bildsensors zumindest eine zusätzlich Referenzaufnahme zu erzeugen, wobei die Datenverarbeitungseinheit ausgebildet ist, zur Ermittlung des fehlerhaften Zustands die Referenzaufnahme zu verwenden. Der Alternativbetriebszustand des Bildsensors kann jeden Betriebszustand beschreiben, der nicht der Tiefenmessung zugeordnet ist. Beispielsweise kann in dem Alternativbetriebszustand eine Common-Mode-Aufnahme erzeugt werden, die dazu verwendet werden kann, um das Ausmaß der Rausch- und/oder Störeffekte, die durch externe Quellen und/oder Umgebungslicht verursacht werden, zu reduzieren. Die Verwendung solcher Informationen kann insbesondere zur Optimierung von Schwellenwerten, zur Anwendung zusätzlicher Kriterien für die Gültigkeit von Pixelpaaren oder ähnlichem verwendet werden. Die Referenzaufnahme kann grundsätzlich eine andere Auflösung als die Hauptaufnahme aufweisen und trotzdem zur Schätzung des Rauschpegels verwendet werden. Auch Daten von "dunklen", d. h. nicht beleuchteten Pixeln können verwendet werden, um eine Schätzung für andere Rauschquellen, wie z. B. die Temperatur, zu generieren.

Die Referenzaufnahme kann auch eine Aufnahme sein, die z.B. auf einem internen zusätzlichen Target der Vorrichtung beruht, das insbesondere durch eine zusätzliche Lichtquelle beleuchtet wird. Durch das interne Target kann eine stabile und wenig szenenabhängige Datengrundlage geliefert werden.

Bevorzugt können sich der Alternativbetriebszustand und der "normale" Betriebszustand (zur Tiefenmessung) abwechseln. Insbesondere kann nach einer vorbestimmten Anzahl von Tiefenmessungen, z.B. nach jeder Tiefenmessung, in den Alternativbetriebszustand gewechselt werden, um insbesondere ein Referenzbild aufnehmen, welches für Diagnosezwecke verwendet werden kann. Die Überprüfung hinsichtlich eines fehlerhaften Zustands des Bildsensors kann dabei nur in dem normalen Betriebszustand, nur in dem Alternativbetriebszustand oder auch in beiden Betriebszuständen erfolgen.

Gemäß einer weiteren Ausführungsform ist die Steuereinheit ausgebildet, den Bildsensor derart anzusteuern, dass ein zum zweiten Pixel benachbartes drittes Pixel die erste Integrationszeit aufweist, wobei die Datenverarbeitungseinheit ausgebildet ist, ein weiteres Pixelwertverhältnis basierend auf einem Pixelwert des dritten und zweiten Pixels zu ermitteln, wobei basierend auf einem Vergleich des Pixelwertverhältnisses mit dem Integrationszeitverhältnis und des weiteren Pixelwertverhältnisses mit dem Integrationszeitverhältnis einen fehlerhaften Zustand des Bildsensors zu ermitteln. Entsprechend kann jedes Pixel einer jeweiligen Zeile bzw. Spalte mit den benachbarten Pixeln der beiden angrenzenden Zeilen bzw. Spalten verglichen werden, um ein jeweiligen Pixelwertverhältnis zu ermitteln. Die doppelte Überprüfung des Pixelwertverhältnisses führt insbesondere zu einer erhöhten Robustheit des Überprüfungsverfahrens. Beispielsweise kann bei einer in der Szene vorliegenden Kante das Pixelwertverhältnis für die beispielhaften Zeilen 21 und 22 nicht mit dem Integrationsverhältnis übereinstimmen, da die Kante zu einem Pixelwertverhältnis führt, welches von dem zugehörigen Integrationszeitverhältnis abweicht. Bei einem Vergleich der Zeile 21 mit der Zeile 20 hingegen, auf die die entsprechende Kante keine Auswirkungen hat, kann festgestellt werden, dass ein Pixelwertverhältnis vorliegt, das dem Integrationsverhältnis entspricht. Die Tiefenmessung kann darüber hinaus als Evaluierungsmetrik verwendet werden, insbesondere um Kanten in dem Bild zu erkennen, bei denen keine Übereinstimmung des Pixelwertverhältnisses und des Integrationszeitverhältnisses zu erwarten ist. Die Tiefenmessung kann dabei beispielsweise verwendet werden, um die Fehlerbedingung näher zu definieren, beispielsweise um den Abweichungsschwellenwert zu bestimmen und/oder um zu bestimmen, welche Mindestanzahl von Pixeln die Fehlerbedingung erfüllen muss, um einen Fehler des Bildsensors ausschließen zu können.

Ein weiterer Aspekt der Erfindung betrifft ein Verfahren zur Überwachung eines Bildsensors mit einer Vielzahl von Pixeln, welches umfasst, dass:
die Pixel des Bildsensors derart angesteuert werden, dass zumindest ein erstes Pixel, welches zu einem zweiten Pixel benachbart angeordnet ist, eine erste Integrationszeit aufweist und das zweite Pixel eine zweite Integrationszeit aufweist, welche sich von der ersten Integrationszeit unterscheidet, und
ein Pixelwertverhältnis basierend auf einem Pixelwert des ersten und zweiten Pixels ermittelt wird, und
basierend auf einem Vergleich des Pixelwertverhältnisses mit einem Integrationszeitverhältnis, welches auf der ersten und zweiten Integrationszeit basiert, ein fehlerhafter Zustand des Bildsensors ermittelt wird.

Für das Verfahren gelten die Ausführungen zu der erfindungsgemäßen Vorrichtung entsprechend, dies gilt insbesondere hinsichtlich Vorteilen und Ausführungsformen.

Es ist zu beachten, dass jede Kombination der vorstehenden Ausführungsformen möglich ist, solange dies nicht explizit ausgeschlossen wurde.

Nachfolgend wird die Erfindung rein beispielhaft unter Bezugnahme auf die Zeichnungen dargestellt. Es zeigen:
- Fig. 1: eine Vorrichtung zur Überwachung eines Bildsensors,
- Fig. 2: ein Ablaufdiagramm eines Verfahrens zur Überwachung eines Bildsensors,
- Fig. 3: eine Visualisierung eines Intensitätsbilds (3a) sowie eines Tiefenbilds (3b) einer beispielhaften Umgebung,
- Fig. 4: eine Visualisierung der Rohmessdaten eines Bildsensors,
- Fig. 5: eine Visualisierung von Pixelstatuskarten, welche basierend auf den in Fig. 4 dargestellten Rohmessdaten erzeugt wurden, und
- Fig. 6: Histogramme von Pixelwertverhältnissen, welche basierend auf den in Fig. 4 dargestellten Rohmessdaten erzeugt wurden.

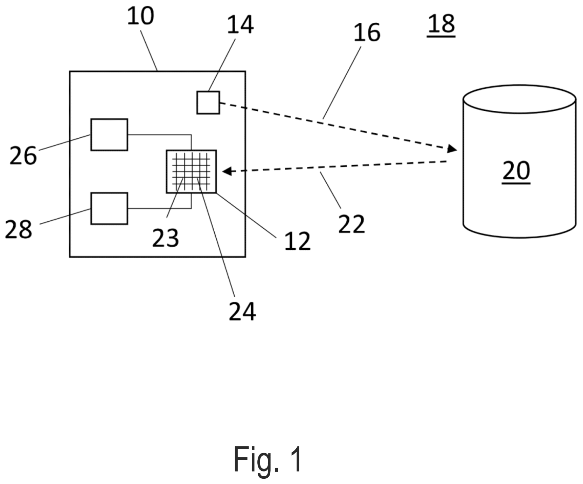

Fig. 1 zeigt eine Vorrichtung 10 zur Überwachung eines Bildsensors 12. Die Vorrichtung 10 umfasst eine Lichterzeugungseinheit 14, welche Licht 16 erzeugt und in einen Messbereich 18 entsendet. Das Licht 16 wird von einem in dem Messbereich 18 befindlichen Objekt 20 reflektiert oder remittiert und das reflektierte bzw. remittierte Licht 22 von dem Bildsensor 12 der Vorrichtung 10 erfasst. Zur Vereinfachung wird weiterhin nur von reflektiertem Licht gesprochen. Der Bildsensor 12 umfasst eine Vielzahl von Pixeln 23, welche in einem zweidimensionalen Pixelarray 24 angeordnet sind. Ferner umfasst die Vorrichtung 10 eine Steuereinheit 26, die ausgebildet ist, die Pixel 23 des Bildsensors 12 derart anzusteuern, dass zumindest ein erstes Pixel, welches zu einem zweiten Pixel benachbart angeordnet ist, eine erste Integrationszeit aufweist und das zweite Pixel ein zweite Integrationszeit aufweist, welche sich von der ersten Integrationszeit unterscheidet. Die Vorrichtung 10 umfasst ferner eine Datenverarbeitungseinheit 28, die ausgebildet ist, ein Pixelwertverhältnis basierend auf einem Pixelwert des ersten und zweiten Pixels zu ermitteln und basierend auf einem Vergleich des Pixelwertverhältnisses mit einem Integrationszeitverhältnis, welches auf der ersten und zweiten Integrationszeit basiert, einen fehlerhaften Zustand des Bildsensors 12 zu ermitteln.

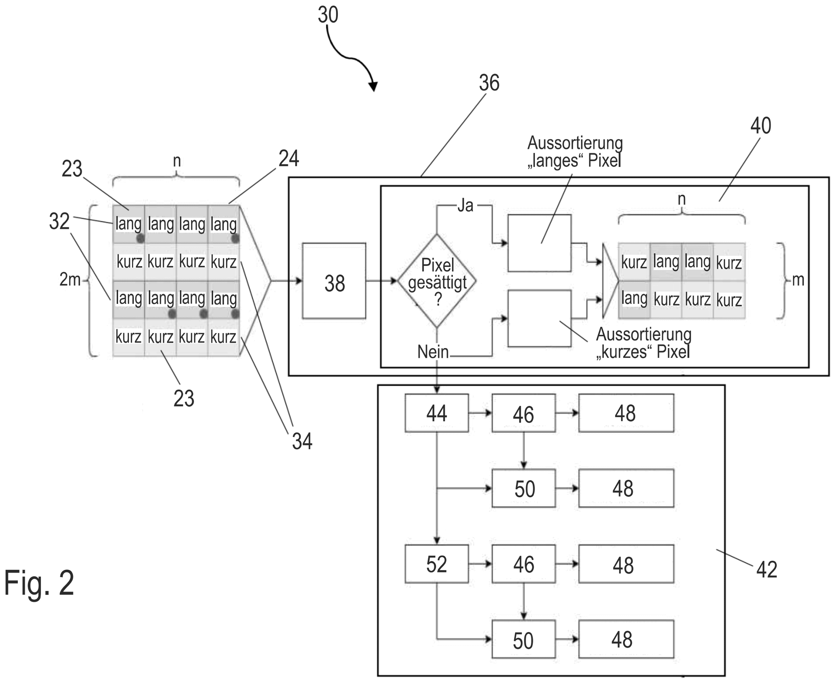

Fig. 2 veranschaulicht ein Ablaufdiagramm eines Verfahrens 30 zur Überwachung eines Bildsensors 12 wie es in einer Vorrichtung 10 zur Anwendung kommen könnte. Wie in Fig. 2 angedeutet, umfasst das zweidimensionale Pixelarray 24 eine erste Gruppe 32 von Zeilen, welche eine erste, "lange" Integrationszeit aufweisen, und eine zweite Gruppe 34 von Zeilen, welche eine zweite, "kurze" Integrationszeit aufweisen, wobei die Zeilen der ersten Gruppe 32 und die Zeilen der zweiten Gruppe 34 alternierend angeordnet sind. "Lang" und "kurz" bedeutet in diesem Zusammenhang länger bzw. kürzer als die jeweils andere Gruppe 32,34 von Zeilen. Die in Fig. 2 mit einem Punkt gekennzeichneten Pixel 23 stellen dabei Pixel 23 dar, welche gesättigt sind. Das in Fig. 2 dargestellte Pixelarray 24 ist nur rein beispielhaft dargestellt und stellt nur einen Ausschnitt des gesamten Pixelarrays 24 dar. Die Pixel 23 des Pixelarrays 24 sind ferner differenzielle Pixel.

In einem optionalen Vorverarbeitungsprozess 36 können die von dem Pixelarray 24 erzeugten Signale bzw. Daten für die weitere Verarbeitung aufbereitet werden. Ein erster Vorverarbeitungsschritt 38 kann beispielsweise folgende Schritte umfassen: Verstärkung, Filterung, Normalisierung oder Formatkonvertierung. In einem weiteren, in Fig. 2 näher dargestellten Vorverarbeitungsschritt 40 kann ferner die Aussortierung von gesättigten Pixeln erfolgen.

Die Aussortierung der gesättigten Pixel 23 ist detailliert in Fig. 2 dargestellt. Insbesondere wird dabei geprüft, ob die Pixel 23 mit einer langen Integrationszeit gesättigt sind oder nicht, wobei bei Vorliegen eines gesättigten Pixels das zugehörige Pixel 23 für die weitere Überprüfung unberücksichtigt bleibt, jedoch kann das Pixel noch in die Erstellung einer Tiefenkarte bzw. eines Tiefenbildes eingehen, wobei z.B. das benachbarte Pixel 23 mit einer kurzen Integrationszeit aus der darunterliegenden Zeile (oder der darüberliegenden Zeile je nach Definition) als entsprechender Zeilenwert berücksichtigt wird.

Ist das Pixel 23 mit einer langen Integrationszeit nicht gesättigt, so wird das entsprechende Pixel 23 für die weitere Verarbeitung hinsichtlich der Überprüfung des Pixelarrays 24 berücksichtigt.

In einem nächsten Schritt erfolgt dann die Überprüfung 42 des Bildsensors 12. Zunächst wird dabei für alle nicht gesättigten Pixel 23, die auch im Kontext weiterer Validierungsparameter (bspw. minimaler Signalpegel) als valide angesehen werden, das Pixelwertverhältnis zwischen dem jeweiligen Pixel 23 mit langer Integrationszeit und dem einen benachbarten Pixel 23 oder mit den beiden benachbarten Pixeln 23 mit kurzer Integrationszeit aus der darunterliegenden Zeile ermittelt. Die sich ergebenden Pixelwertverhältnisse können anschließend statistisch analysiert werden, um einen Fehlerzustand des Bildsensors 12 zu ermitteln. Vorliegend wird in einem ersten Schritt 44 die Fehlerbedingung geprüft, insbesondere ob die Abweichung eines jeweiligen Pixelwertverhältnisses von dem Integrationszeitverhältnis größer als ein vorgegebener Abweichungsschwellenwert ist. In einem zweiten Schritt 46 wird anschließend ermittelt, ob die Fehlerbedingung für eine Mindestanzahl von benachbarten Pixelpaaren, d.h. für eine Mindestanzahl der ermittelten Pixelwertverhältnisse, erfüllt ist. Ist die Fehlerbedingung nicht für die Mindestanzahl erfüllt, so wird ein Fehlerzustand des Bildsensors festgestellt 48.

Zusätzlich kann die Überprüfung über einen vorgegebenen Zeitraum durchgeführt werden 50, um Änderungen in der Fehlermetrik über den Zeitverlauf festzustellen und beispielsweise durch die Erfassung einer plötzlichen Änderung der Fehlermetrik oder die Erkennung einer Anomalie einen Fehlerzustand festzustellen.

Ferner kann für die Überwachung des Bildsensors 12 eine Region of Interest (ROI) 52, z.B. eines Pixelfensters, definiert werden auf Basis derer die Ermittlung eines Fehlerzustands erfolgt. Die ROI kann insbesondere nur einen Teilbereich des Bildes bzw. eine Teilmenge von Pixeln 23 umfassen und führt somit zu einer Reduzierung des Rechenaufwands. Die vorstehenden Überprüfungsschritte können analog auf die ROI angewendet werden, um einen Fehlerzustand des Bildsensors 12 zu ermitteln. Dies kann vorteilhaft sein, wenn bspw. schlecht ausgeleuchtete Bereiche frühzeitig ausgeschlossen werden sollen. Oder bspw. wenn unterschiedlich strenge Kriterien für die Überprüfung des gesamten Pixelarrays und die Überprüfung der ROI angewendet werden sollen.

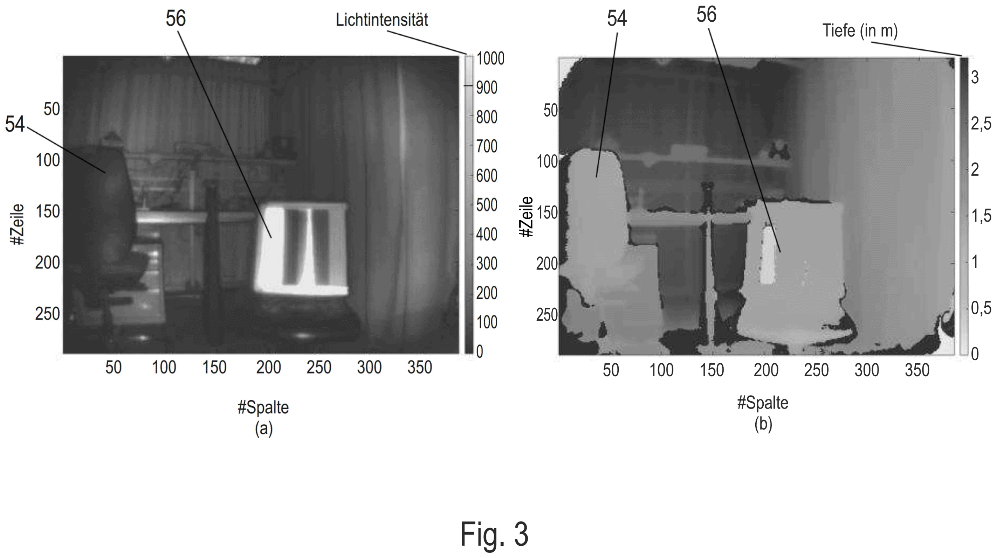

Fig. 3 zeigt eine Visualisierung eines Intensitätsbilds (3a) sowie eines Tiefenbilds (3b) einer Laborumgebung mit Blick auf einen Stuhl 54, einen Reflektor 56 sowie anderer Ausrüstung, wobei beide Bilder auf Messdaten beruhen, die mit einem TOF-Bildsensor aufgenommen wurden.

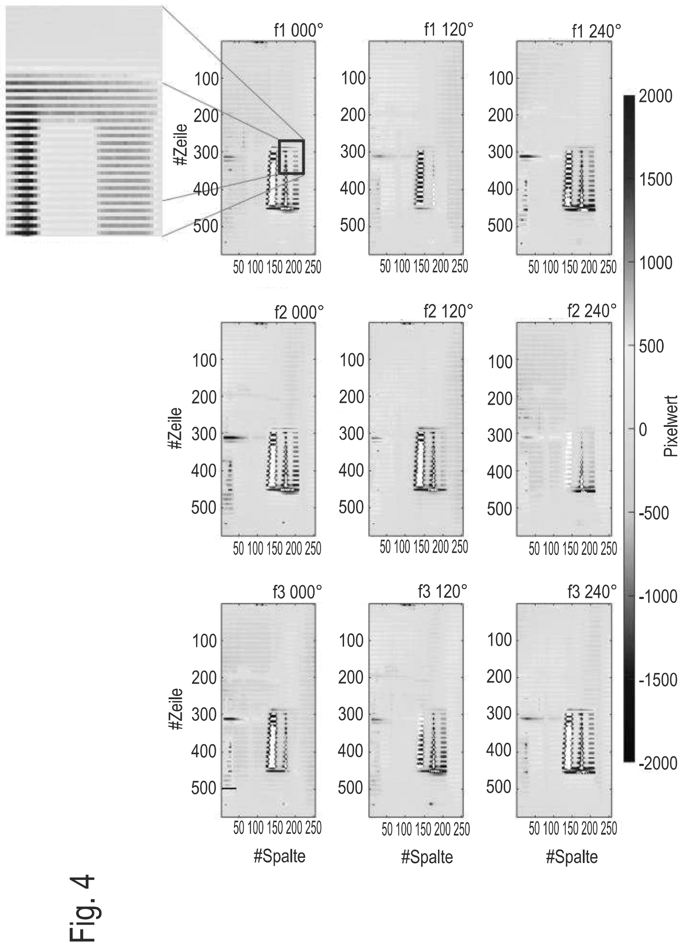

Fig. 4 zeigt eine Visualisierung der Rohdaten des TOF-Bildsensors für die in Fig. 3 dargestellte Umgebung, wobei die unterschiedlichen Graphen ausgesendetem Licht 16 mit unterschiedlichen Modulationsfrequenzen und einer Pixelansteuerung bei gleicher Frequenz aber unterschiedlichem Phasenversatz relativ zum Licht entsprechen.

Jede Reihe zeigt Messungen, die mit Licht mit einer jeweiligen Frequenz f1, f2 oder f3 generiert wurden. Jede Spalte hingegen zeigt Messungen, die mit einem jeweiligen Phasenversatz 0°, 120° oder 240° zwischen Pixel und Lichtquelle durchgeführt wurden.

Gesättigte Pixel 23 sind in weißer Farbe dargestellt. Die Anzahl der in Fig. 4 dargestellten Pixelreihen ist doppelt so groß ist wie die Anzahl der Pixelreihen der Intensitäts- und Tiefenbilder in Fig. 2, da die Höhe des Ausgabebildes im Rahmen der HDR-Verarbeitung für einen größeren Dynamikbereich halbiert wird.

Aus dem herangezoomten Bildausschnitt, welcher in Fig. 4 veranschaulicht ist, wird deutlich, dass die Zeilen des Pixelarrays alternierend eine erste bzw. eine zweite sich von der ersten unterscheidende Integrationszeit aufweisen. Vorliegend beträgt das Integrationszeitverhältnis zwischen der ersten und zweiten Integrationszeit 4, wodurch jede zweite Zeile eine 4 mal längere Integrationszeit aufweist als die Vorgängerzeile, was in den in den Rohdaten anhand der unterschiedlichen Graustufen erkennbar ist.

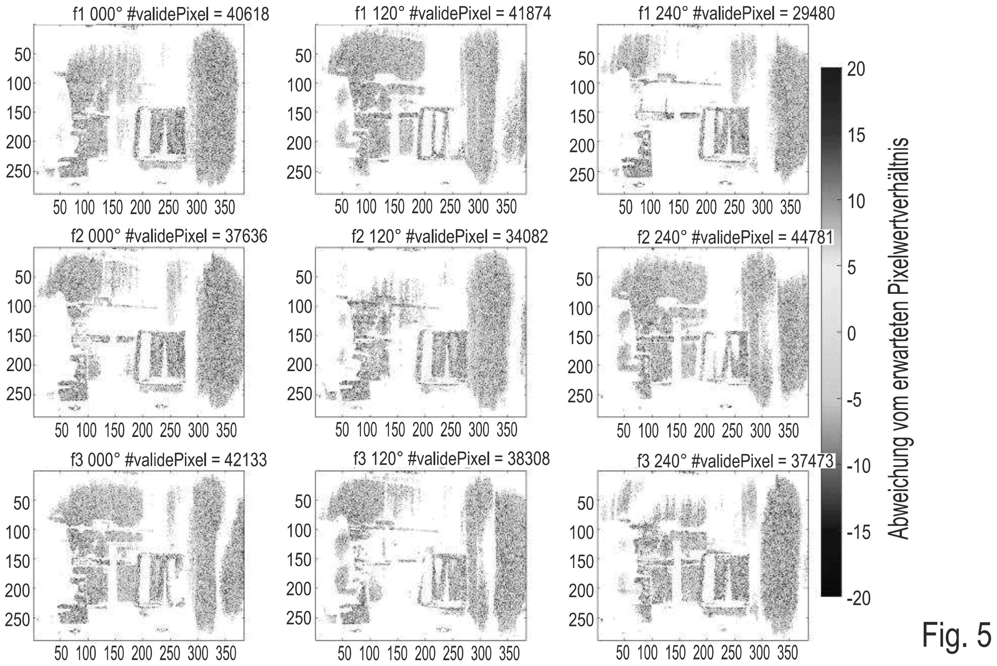

Fig. 5 zeigt eine Visualisierung von Pixelstatuskarten für die unterschiedlichen in Fig. 4 gezeigten Rohmessdaten. Die Pixelstatuskarten werden auf der Grundlage der rohen, digitalen Messdaten erzeugt. Für ein voreingestelltes Integrationszeitverhältnis von 4 wird dabei ein leicht abweichendes Pixelwertverhältnis von 4,2 erwartet. Die Abweichung (siehe Balken) des gemessenen Pixelwertverhältnisses von seinem erwarteten Pixelwertverhältnis wird für alle Pixelpaare angezeigt, welche innerhalb einer Abweichungsschwelle von 20 liegen. Mit anderen Worten werden alle nicht gesättigten Pixelpaare berücksichtigt, die die Bedingung $abs \left(\frac{{P}_{1}}{4.2}-{P}_{2}\right) < \pm 20$ erfüllen. Pixel 23, welche gesättigt sind, unter einem Mindestsignalpegel liegen, z.B. abs(Pixelwert) < 40, oder die Schwellenwertanforderung nicht erfüllen, sind in Fig. 5 weiß dargestellt. Die resultierende Pixelstatuskarte zeigt die Evaluierung jeweiliger benachbarter Pixelpaare an, für die die jeweiligen Pixelwertverhältnisse ermittelt und mit dem Integrationszeitverhältnis bzw. in diesem Fall dem zu erwartenden Pixelwertverhältnis verglichen werden. Einfacher ausgedrückt, wird die Anzahl der "validen" Pixel, welche die oben genannten Kriterien erfüllen, weiterverarbeitet und dazu genutzt, um den Bildsensor 12 zu überwachen und/oder defekte Pixel oder Pixelbereiche und/oder Fehler in der Steuerung der Messung während der Laufzeit des Bildsensors 12 zu ermitteln.

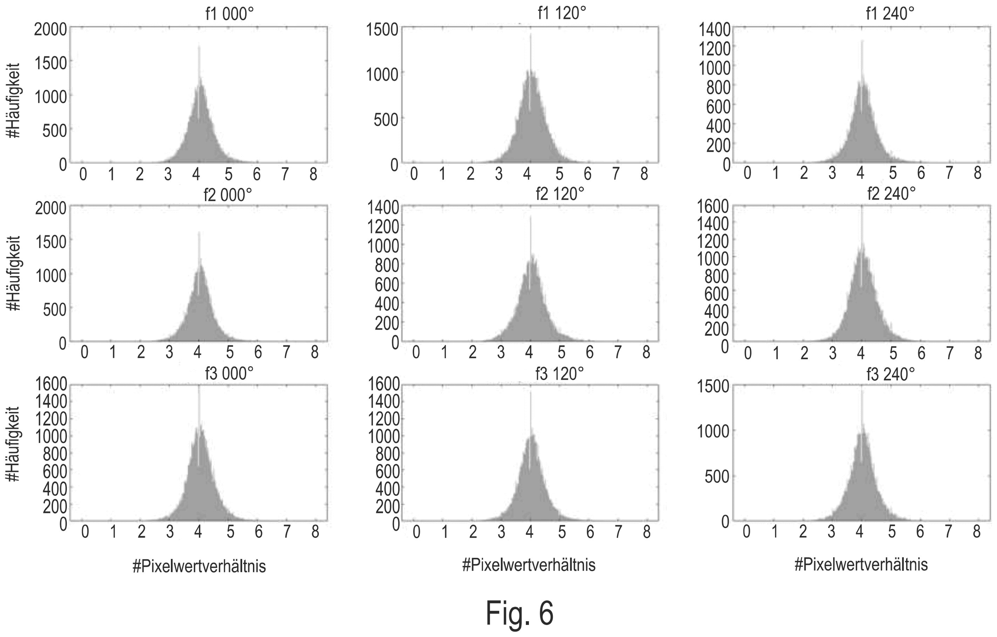

Fig. 6 zeigt Histogramme von Pixelwertverhältnissen, welche auf Basis der in Fig. 5 gezeigten Pixelstatuskarten bzw. auf Basis der den Pixelstatuskarten zugrundeliegenden Daten erzeugt wurden. Die Histogramme wurden dabei unter Verwendung der "validen" Pixel erstellt und zeigen die Verteilung der Pixelwertverhältnisse, welche sich um das zu erwartende Pixelwertverhältnis von 4.2 gaußförmig verteilen.

### Bezugszeichenliste

- 10: Vorrichtung
- 12: Bildsensor
- 14: Lichterzeugungseinheit
- 16: Licht
- 18: Messbereich
- 20: Objekt
- 22: reflektiertes Licht
- 23: Pixel
- 24: Pixelarray
- 26: Steuereinheit
- 28: Datenverarbeitungseinheit
- 30: Verfahren
- 32: erste Gruppe
- 34: zweite Gruppe
- 36: Vorverarbeitungsprozess
- 38: erster Vorverarbeitungsschritt
- 40: weiterer Vorverarbeitungsschritt
- 42: Überprüfung des Bildsensors
- 44-52: Überprüfungsschritte
- 54: Stuhl
- 56: Reflektor

## Patentansprüche

1. Vorrichtung (10) zur Überwachung eines Bildsensors (12), mit:
einem Bildsensor (12) mit einer Vielzahl von Pixeln (23);
einer Steuereinheit (26), die ausgebildet ist, die Pixel (23) des Bildsensors (12) derart anzusteuern, dass zumindest ein erstes Pixel (23), welches zu einem zweiten Pixel (23) benachbart angeordnet ist, eine erste Integrationszeit aufweist und das zweite Pixel (23) ein zweite Integrationszeit aufweist,
welche sich von der ersten Integrationszeit unterscheidet; und
einer Datenverarbeitungseinheit (28), die ausgebildet ist, ein Pixelwertverhältnis basierend auf einem Pixelwert des ersten und zweiten Pixels (23) zu ermitteln und
basierend auf einem Vergleich des Pixelwertverhältnisses mit einem Integrationszeitverhältnis, welches auf der ersten und zweiten Integrationszeit basiert, einen fehlerhaften Zustand des Bildsensors (12) zu ermitteln.

2. Vorrichtung (10) nach Anspruch 1,
wobei die Pixel (23) differenzielle Pixel (23) umfassen.

3. Vorrichtung (10) nach Anspruch 1 oder 2,
wobei der Bildsensor (12) ein zweidimensionales Pixelarray (24) umfasst, die Steuereinheit (26) ausgebildet ist, den Bildsensor (12) gemäß einem Ansteuerungsmuster anzusteuern, bei dem eine erste Gruppe (32) von Spalten oder Zeilen des Pixelarrays (24) die erste Integrationszeit aufweisen und eine zweite Gruppe (34) von Spalten und Zeilen des Pixelarrays (24) die zweite Integrationszeit aufweisen und
Spalten oder Zeilen der ersten Gruppe (32) und Spalten oder Zeilen der zweiten Gruppe (34) alternierend angeordnet sind.

4. Vorrichtung (10) nach einem der vorstehenden Ansprüche,
wobei die Datenverarbeitungseinheit (28) ausgebildet ist, die von den Pixeln (23) erzeugten Signale vorzuverarbeiten, wobei die Vorverarbeitungsschritte zumindest einen der folgenden Schritte umfasst: Verstärkung, Filterung, Normalisierung, Formatkonvertierung oder Aussortierung von gesättigten Pixeln (23).

5. Vorrichtung (10) nach einem der vorstehenden Ansprüche,
wobei die Datenverarbeitungseinheit (28) ausgebildet ist, einen fehlerhaften Zustand basierend auf einer Fehlerbedingung festzustellen, insbesondere wobei die Fehlerbedingung umfasst, dass die Abweichung des Pixelwertverhältnisses von dem Integrationszeitverhältnis größer als ein vorgegebener Abweichungsschwellenwert ist.

6. Vorrichtung (10) nach Anspruch 5,
wobei die Datenverarbeitungseinheit (28) ausgebildet ist, einen fehlerhaften Zustand festzustellen, wenn die Fehlerbedingung für eine Mindestanzahl von benachbarten Pixelpaaren (23) erfüllt ist.

7. Vorrichtung (10) nach Anspruch 5 oder 6,
wobei die Fehlerbedingung umfasst, dass die Abweichung eines Mittelwerts und/oder Medians einer Vielzahl von Pixelwertverhältnissen von dem Integrationszeitverhältnis oder dass die Abweichung der Standardabweichung der Vielzahl von Pixelwertverhältnissen von einem Standardabweichungsreferenzwert größer als ein vorgegebener Abweichungsschwellenwert ist.

8. Vorrichtung (10) nach einem der vorstehenden Ansprüche,
die Datenverarbeitungseinheit (28) ausgebildet ist, einen fehlerhaften Zustand des Bildsensors (12) basierend auf zumindest einem Pixelfenster (23) zu ermitteln, welches einen Teilbereich des Pixelarrays (24) umfasst.

9. Vorrichtung (10) nach einem der vorstehenden Ansprüche,
wobei die Datenverarbeitungseinheit (28) ausgebildet ist, einen fehlerhaften Zustand basierend auf einer, insbesondere einzigen, durch den Bildsensor (12) erzeugten Aufnahme und/oder einer Vielzahl von zeitlich aufeinanderfolgenden, unterschiedlichen Aufnahmen zu ermitteln.

10. Vorrichtung (10) nach einem der vorstehenden Ansprüche,
wobei der Bildsensor (12) ausgebildet ist, in einem Alternativbetriebszustand des Bildsensors (12) zumindest eine zusätzlich Referenzaufnahme zu erzeugen, wobei die Datenverarbeitungseinheit (28) ausgebildet ist, zur Ermittlung des fehlerhaften Zustands die Referenzaufnahme zu verwenden.

11. Vorrichtung (10) nach einem der vorstehenden Ansprüche,
wobei die Steuereinheit (26) ausgebildet ist, den Bildsensor (12) derart anzusteuern, dass ein zum zweiten Pixel (23) benachbartes drittes Pixel (23) die erste Integrationszeit aufweist,
wobei die Datenverarbeitungseinheit (28) ausgebildet ist, ein weiteres Pixelwertverhältnis basierend auf einem Pixelwert des dritten und zweiten Pixels (23) zu ermitteln, und
basierend auf einem Vergleich des Pixelwertverhältnisses mit dem Integrationszeitverhältnis und des weiteren Pixelwertverhältnisses mit dem Integrationszeitverhältnis einen fehlerhaften Zustand des Bildsensors (12) zu ermitteln.

12. Verfahren (30) zur Überwachung eines Bildsensors (12) mit einer Vielzahl von Pixeln (23), welches umfasst, dass:
die Pixel (23) des Bildsensors (12) derart angesteuert werden, dass zumindest ein erstes Pixel (23), welches zu einem zweiten Pixel (23) benachbart angeordnet ist, eine erste Integrationszeit aufweist, welche sich von einer zweiten Integrationszeit des zweiten Pixels (23) unterscheidet, und
ein Pixelwertverhältnis basierend auf einem Pixelwert des ersten und zweiten Pixels (23) ermittelt wird,
wobei basierend auf einem Vergleich des Pixelwertverhältnisses mit einem Integrationszeitverhältnis, welches auf der ersten und zweiten Integrationszeit basiert, ein fehlerhafter Zustand des Bildsensors (12) ermittelt wird.
